Europäisches Patentamt

European Patent Office

Office européen des brevets

(19)

(11) **EP 1 244 354 B1**

(12) **EUROPEAN PATENT SPECIFICATION**

(45) Date of publication and mention
of the grant of the patent:
**19.11.2003 Bulletin 2003/47**

(51) Int Cl.$^7$: **A01N 25/02**

(21) Application number: **01901872.0**

(86) International application number:
**PCT/US01/00570**

(22) Date of filing: **05.01.2001**

(87) International publication number:
**WO 01/049114 (12.07.2001 Gazette 2001/28)**

(54) **EMULSIFIABLE CONCENTRATE COMPOSITIONS WITH SILICONE ANTIFOAMS**

EMULGIERBARE KONZENTRATZUSAMMENSETZUNGEN MIT SILIKON-ENTSCHÄUMERN

COMPOSITIONS DE CONCENTRATS EMULSIFIABLES AVEC DES AGENTS ANTIMOUSSES DE
SILICONE

(84) Designated Contracting States:
**AT BE CH CY DE DK ES FI FR GB GR IE IT LI LU
MC NL PT SE TR**

(30) Priority: **06.01.2000 US 478589**

(43) Date of publication of application:
**02.10.2002 Bulletin 2002/40**

(73) Proprietor: **Crompton Corporation
Middlebury, Connecticut 06749 (US)**

(72) Inventors:
• **SUN, Jinxia
Hopewell Junction, New York 12533 (US)**
• **SCOTT, Charles
Poughquag, NY 12573 (US)**

• **RUCKLE, Robert, E.
Brewster, NY 12533 (US)**
• **POLICELLO, George, A.
Ossining, NY 10562 (US)**

(74) Representative:
**Wibbelmann, Jobst, Dr., Dipl.-Chem. et al
Wuesthoff & Wuesthoff,
Patent- und Rechtsanwälte,
Schweigerstrasse 2
81541 München (DE)**

(56) References cited:
**EP-A- 0 791 384          WO-A-95/03881
US-A- 4 514 319          US-A- 4 690 688**

## Description

### Background

Emulsifiable concentrates (EC) are one of the most widely used pesticide formulations types for agricultural applications, because of its easy preparation and handling and ability to delivery higher poundage of pesticide active (s) effectively and economically. Emulsifiable concentrates are prepared from oily pesticide active ingredients or from low-melting solid active ingredients which can be dissolved in nonpolar hydrocarbon solvents such as xylene, C9-C12 aromatic solvents, kerosene or other propriety solvent. Surfactant emulsifiers are added to these formulations to ensure spontaneous emulsification with good emulsion stability in the spray tank. A typical EC formulation contains approximately 20-80% active ingredient, 20-75% solvent, and 5-10% emulsifiers. These formulations are diluted in water prior to use to form an emulsion.

Antifoams or defoamers frequently are used to control foam formation in pesticide processes or tank-side application. Most conventional antifoams consist of mixtures of insoluble oil and hydrophobic solid particles. The EC formulation containing this type of antifoam is heterogeneous (i.e., the system consists of two insoluble phases). However. the heterogeneous phase is unstable and eventually separation will occur during either the formulation or storage period, which cause cream problems. So far, this problem has not been solved in pesticide EC formulation.

WO 95/03881 A1 discloses oil-based emulsifiable concentrates including (a) at least one oil component; (b) at least one surfactant hydrocarboxyl saccharide; and (c) at least one other non-ionic surfactant. The concentrate may also include (d) an antifoaming agent, especially a polysiloxane.

US-A-4,514,319 relates to a hydrocarbon oil based antifoam composition containing a hydrocarbon-silicon copolymer, a hydrophobic filler, an organo-silicone surfactant, a hydrocarabon carrier oil and optional a silicone oil.

US-A-4,690,688 teaches a method of controlling foaming of liquid hydrocarbon fuels by including therein of certain siloxane polyoxyalkylene copolymers.

EP-A-0 791384 discloses silicone polyether copolymers which provide control for foams generated by organosilicone based surfactants in water.

### Summary of the invention

The present invention relates to a foam control agent that is a homogeneous mixture (i.e., one phase) in EC pesticidal compositions. The EC detailed here comprise, in general, an organic solvent, soluble organic pesticide or mixtures of organic solvent soluble organic pesticides, emulsifiers, and an organosilicone foam control agent that is soluble in the EC matrix.

### Detailed Description of the Invention

The EC may contain the following ingredients: Active ingredient. Emulsifiers, Antifoam. Solvent and Optional Ingredients.

a) Active ingredient:

The choice of active(s) is pre-determined by the intended application. The active ingredient includes any organic solvent soluble pesticide or mixtures or pesticides. The liquid herbicides useful herein include but are not limited to chloroacetamides (dimethanamid) or chloroacetanilides such as 2'-ethyl-6'-methyl-N-(ethoxymethyl)-2-chloroacetylanilide (acetochlor), 2',6'-diethyl-N-propoxyethyl-2-chloroacetanilide (pretilachlor). 2-ethyl-6-methyl-N-(1'-methyl-2'-methoxyethyl) chloroacetylanilide (metachlor). N-Butoxy methyl-2'6'-diethyl-3-chloro acetylanilide (butachlor), and others including alachlor, metolachlor, diethatyl. metazachlor, dimethachlor, and preferably acetochlor; dichloroacetamide (dichlormid); butylates; cinmethylin; aryloxyphenoxys including fluazifop (e.g. fluazifop-P aryloxyphenoxy propionate): phenoxys and phenoxy derivatives such as phenoxy esters. phenoxyalkanoic acid, phenoxyacetic acid including 2.4-D ester; thiocarbamates or carbamothioates including butylate, cycloate, molinate, pebulate, thiobencarb, triallate, vernolate, s-ethyl dipropyl carbamothioate, s-ethyl diethylcarbamathioate (ethiolate); dietholate; cyclohexanedione or cyclohexanone including sethoxydim or clethodim; dinitroaniline (isopropalin); oximes (fluxofenim); aldehydes (acrolein); and so forth.

Examples of useful solid herbicides include benzoic acids and derivatives of benzoic acid including 3,6-dichloro-o-anisic acid also referred to by various trade or other names including naptalam and dicamba sold under various trades or names including BANVEL, BANFEL, BANVEL CST, BANVEL D, BANVEL XG, MEDIBEN, BANEX, and so forth, and imidazolinyl benzoic acids and esters and salts thereof; ureas such as tebuthiuron; and AC 263,222; imines such as CGA-248757; imides including N-phenylphthalimide such as Flumichlorac; phenoxys and derivatives of phenoxys including phenoxyalkanoic acid or phenoxy acetic acid such as 2,4-D (2,4-dichlorphenoxy acetic acid), 3,4-DA (3,4-dichlorphenoxy acetic acid), 2,4-DB(4-(2,4-dichlorophenoxy)acetic acid), 3,4-DB (4-(3,4-dichlorphenoxy)butanoic acid), 2,4-DEB (2-(2,4-dichlkorphenoxy)ethyl benzoate), 2,4-DEP (tris[2-(2,4-dichlorophenoxy)ethyl] phosphite). MCPA acid (4-chloro-2-methylphenoxy acetic acid), MCPB acid (4-(4-chloro-2-methylphenoxy)butanoic acid) acid, mecoprop, diclofop, difenopenten, and dichlorprop; aryloxyphenoxy propionates such as fenoxaprop, haloxyfop and Quizalofop-P; benzothiazoleacetic acids such as benazolin; dimethyl tetrachloroterephthalate (DCPA); amides and derivatives of amides such as pronamide, propanil and napropamide; acetamides such as mefluidide; benzamide such as isoxaben; chloroacetamides or chloroacetanilides such as propachlor; dichloroacetamide such as R-29148; dinitroanilines such as benefin, oryzal in and prodiamine; nitriles including benzonitriles and hydroxybenzonitriles such as bromoxynil, ioxynil and dichlobenil; diphenylethers or nitrodiphenylethers such as acifluorfen, bifenox, fluoroglycofen, fomesafen and oxyfluorfen; dithiocarbamates such as metham; carbamates including phenylcarbamates such as desmedipham, phenmedipham and asulam; ureas including phenylureas such as fluometuron, linuron, siduron and diuron; pyridazinonone such as norflurazon and pyrazon; pyridines such as dithiopyr and thiazopyr; pyridinone such as fluridone; pyridinecarboxylic acid or picolinic acid such as triclopyr, clopyralid and picloram; oxadiazolidines such as methazole; benzothiadiazole such as bentazon; and so forth.

Liquid insecticides useful herein include but are not limited to organophosphates such as fonofos (Dyfonate®), diazinon, malathion, parathion, and so forth; piperonyl butoxides; synthetic pyrethroids such as bioresmethrin, resmethrin and zeta-cypermethrin ; a synthetic pyrethrin-type such as allethrin; and so forth.

Solid insecticides include but are no limited to pyrethrins; carbamates such as aldicard; synthetic pyrethroids such as bifenthrin, permethrin and tefluthrin; organophosphates such as methyl parathion: organophosphates such as acephate and dimethoate; organochlorines such as endosulfan: carbamates such as carbaryl(1-naphthyl N-methylcarbamate) and methomyl (s-methyl N-[methylcarbamoyl)oxy]-thioacetamimidate); and so forth.

Fungicides include categories of aliphatic nitrogen fungicides; anilides; aromatic fungicides including aromatic nitriles; benzimidazoles and benzimidazole precursors; carbamates; benzimidazole carbamates; chlorophenyls; conazoles; dicarboximides; dinitrophenyls; thiocarbamates and dithiocarbamates; imidazoles; morpholines; organo phosphorous fungicides; guanidines; hydroxyanilides; morpholines; oils, phenylamides; phenylsulfamides; phenylureas; pyridines; phthalimides; pyrimidinamines; pyrimidines; pyrimidinols; quinolines; quinones; quinoxalines; thiazoles; stobilurins; triazoles; xylylanines; various unclassified fungicides; and so forth.

Examples of liquid fungicides useful herein include but are not limited to morpholines such as fenpropidin, fenpropimorph and tridermorph; piperalin; conazoles such as flusilazole, propiconazole, tebuconazole, triadimefon, and so forth; pyridines such as pyrifenox; thiazoles such as etradiazole; organo phosphorous compounds such as phosdiphen; imidazoles such as pefurazoate; and so forth.

Blends of pesticide may be used.

Preferably, the amount of total pesticide in the emulsifiable concentrate is between about 40% to about 97%, even more preferably about 50% to about 90%, and most preferably about 65% to about 80%.

b) Emulsifers:

The emulsifiers may consist of at least one emulsifier which can be a nonionic surfactant. ionic surfactant or a blend of both type of surfactants. The useful nonionic surfactants include: alkoxylate block polymers, alkoxylated alcohols, alkoxylated alkylphenols; alkoxylated amines,alkoxylated amides; alkoxylated fatty esters, alkoxylated oils, fatty esters, alkoxylated fatty acids, sorbitan derivatives, etc.

The typically ionic surfactants found in emulsifiers are: alkylaryl sulfonates; alkylaryl sulfonic acides; carboxylated alcohol ethoxylates and alkylphenol ethoxylates; carboxylic acides/fatty acids; diphenyl sulfonate derivatives; olefin sulfonates; phosphate esters: phosphorous organice derivatives; quaternary surfactants; sulfates and sulfonates of oils and fatty acide; sulfates and sulfonates ethoxylated alkylphenols; sulfates of ethoxylated alcohols; sulfates of fatty esters; sulfonates of dodecyl and tridecylbenzenes; sulfonates of naphthalene and alkyl naphthalene; sulfonates of petroleum; sulfosuccinamates, alkanolamides, alkoxylated amine.

The preferred emulsifiers for this application are alkoxylated alcohols and alkyphenol, most preferably of 4 to 50 ethylene oxide units and a hydrophobe of 4 to 16 carbons. Other preferred surfactants are alkylphenol EO/PO block copolymers. e.g., WITCONOL NS 108 LQ, and alkoxylated amine salts of ethoxylated alkylphenol sulfates, e.g., WITCOLATE 1335 from CK Witco Corporation.

Developing an effective emulsifier (blend of emulsifiers) requires careful screening of potential emulsifiers (surfactants), conducting emulsion tests according to prescribed method. and optimizing the performance of the most promising emulsifier(s). The screening of potential emulsifiers package is dependent on pesticide active type, and solvents. One skilled in the art of EC technology understands the importance of HLB and surfactant choice for such formulations.

The surfactant is present at 1 to 50 weight percent of the emulsifiable concentrate, preferably 3 to 10 weight percent.

C) Solvent

The selection of a suitable solvent(s) system is made by taking into consideration the solubility of the active (s) and the chemical and toxicological profiles of the solvent(s). The solvents include all EPA AP proved solvents and the list may include: alphatic paraffinic oils such as kerosene or refined paraffins: aromatic solvents such as xylene; $C_9$-$C_{12}$ aromatic solvents such as AROMATIC 100, 150 AND 200 (Exxon Chemical), ISOPAR L, SOLVESSO 100, 150, and 200; chlorinated hydrocarbons such as chlorobenzene; alcohols such as butanol and benzyl alcohol; ketones such as cyclohexanone and N-methyl pyrollidone; and ethers such as diethylene glycol and diethoxol. In addition, the solvent may include vegetable oils, methylated vegetable oils, petrol-oils, sugar esters of fatty acids, e.g., sucrose esters, etc.

The preferred solvents are $C_9$-$C_{12}$ hydrocarbon solvents because of their low cost and their ability to solubilize many pesticide toxicants.

The solvent may be present at 0 to 95 weight percent of the emulsifiable concentrate, preferably 20 to 50 weight percent.

D) Silicone antifoam

The general structure of silicone antifoam is:

$$[R^2(R^1)_2SiO_{1/2}]_e[SiO_{4/2}]_f[SiO_{3/2}R^1]_g[SiO_{2/2}(R^1)_2]_x[SiO_{2/2}R^1Z]_y$$

c= 2*f + g + 2;
f = 0 to 2, preferably 0;
g = 0 to 2, preferably 0;
x = 30-150, prefer 90-100. most preferably 60-90;
y = 0-30, preferably 4-15;

Where when y>0, x/y= 4 to 18, preferably 7 to 12, and x +y >= 30; and when y = 0, then x/e is 20/1 to 10/1, preferably 18/1 to 12/1;

$R^1$ = alkyl of 1-18 carbon; $R^2$ = $R^1$ or Z with the proviso that when y = 0, $R^2$ = Z;
Z = $R^4OB_nG$;
$R^4$ is a divalent bridging group of 2-4 carbons, preferably C3;
B is an alkylene oxide group containing 2-4 carbon (i.e., EO, PO or BO), wherein less than ten mole percent of the alkylene oxide functionalities are ethylene oxide, but preferably, none is ethylene oxide (EO);
n = 8-30, preferably 8-15; and
G=H, hydrocarbon radical of 1-18 carbons, or acetyl, preferably H.

The foam control agent should be present at 0.01 to ten weight percent of the emulsifiable concentrate.

E) Optional ingredients

Other additives may optionally be included in the formulation at very little amount (< 5 wt. %). Such additives can include, for example, an antifreeze, pH buffer etc. A finely divided hydrophobic filler such as silica, or $TiO_2$ may be added.

Emulsifiable Concentrate Preparation

The preparation of an emulsifiable concentrate containing the silicone antifoam is accomplished by adding the silicone either into the emulsifiers, or into the mixtures of emulsifiers, solvent, and active ingredients with proper mixing or blending. Typical ingredients which can be used in the preparation of the emulsifiable concentrates are described above.

**Emulsifiable Concentrate Application to Agriculture**

Emulsifiable concentrates of the present invention can be diluted with water to a desired solids level and applied onto the targets using any suitable means, such as. for example, spraying, dipping or rubbing. The amount of active in the final formulation is 1 to 95 weight percent. The amount of antifoam in the total emulsion ranges from about 1 to 200 ppm, and preferably the amount ranges from about 1 to 40 ppm by weight.

**EXAMPLES**

Description of Test Methods

Effect on foam control - A shake test was used to measure the foamability of different tank mixtures. Different emulsifiable concentrates with or without silicone antifoam were diluted with water. Then 50 ml of each emulsion was shaken for 2 minutes with a Wrist shaker. The foam height was recorded at 0, 1, 2 and 5 minute after shaking. Emulsifiable concentrates Stability - The stability of the emulsifiable concentrates was examined by storing at room temperature and in a 50° C oven for three weeks.

**Example 1**

Table 1.

| Organosilicones included in the listed EC formulations | | | | | | |
|---|---|---|---|---|---|---|
| Reference | X | E | Y | F | G | Description of Z group |
| Silicone 1 | 74 | 2 | 9 | 0 | 0 | $C_3H_6O(C_3H_6O)_{13}$-H |
| Silicone 2 (comp) | 7 | 2 | 3 | 0 0 | 0 | $C_3H_6O(C_3H_6O)_{13}$-Butyl |
| Silicone 3 (comp.) | 0 | 2 | 1 | 0 | 0 | $C_3H_6O(C_3H_6O)_{1.6}$-H |

Table 2.

| Comparative Conventional Antifoams | |
|---|---|
| Reference | Description |
| Sag 47 (CK Witco) | 100% dimethylpolysiloxan e compound |
| Silex SE-2 (Exacto) | 20% dimethylpolysiloxane emulsion |

| Butachlor EC formulation W/O Antifoam (EC W/O) | |
|---|---|
| Ingredients | % weight |
| WITCOLATE 1335 | 2.8 |
| NS 108 LQ | 1.4 |
| A-150 | 1.8 |
| A-100 | 37.6 |
| Butachlor | 56.4 |

| Butachlor EC formulation with Silicone 1 (EC/Silicone 1) | |
|---|---|
| Ingredients | % weight |
| WITCOLATE 1335 | 2.8 |
| NS 108 LQ | 1.4 |
| A-150 | 1.6 |
| Silicone 1 * | 0.2 |
| A-100 | 37.6 |
| Butachlor | 56.4 |

| Comparative Butachlor EC formulation with Silicone 2 (EC/Silicone 2) | |
|---|---|
| **Ingredients** | **% weight** |
| WITCOLATE 1335 | 2.8 |
| NS 108 LQ | 1.4 |
| A-150 | 1.6 |
| Silicone 2 | 0.2 |
| A-100 | 37.6 |
| Butachlor | 56.4 |

| Comparative Butachlor EC formulation with Silicone 3 (EC/Silicone 3) | |
|---|---|
| **Ingredients** | **% weight** |
| WITCOLATE 1335 | 2.8 |
| NS 108 LQ | 1.4 |
| A-150 | 1.6 |
| Silicone 3 | 0.2 |
| A-100 | 37.6 |
| Butachlor | 56.4 |

| Comparative Butachlor EC formulation with SAG 47 (EC/SAG 47) | |
|---|---|
| **Ingredients** | **% weight** |
| WITCOLATE 1335 | 2.8 |
| NS 108 LQ | 1.4 |
| A-150 | 1.6 |
| SAG 47 | 0.2 |
| A-100 | 37.6 |
| Butachlor | 56.4 |

| Comparative Butachlor EC formulation with Silex SE-2 (EC/Silex SE-2) | |
|---|---|
| **Ingredients** | **% weight** |
| WITCOLATE 1335 | 2.8 |
| NS 108 LQ | 1.4 |
| A-150 | 1.6 |
| SILEX SE-2 | 0.2 |
| A-100 | 37.6 |
| Butachlor | 56.4 |

| **Foam Control and Stability Results** | | | |
|---|---|---|---|
| **Formulation** | **Foam Height**[a] | | **Stability** |
| | 0 min | 1 min | |
| EC W/O Antifoam | 6 | 6 | clear |
| EC W/Silicone 1 | 3 | 0 | clear |
| EC W/Silicone 2 | 6 | 6 | clear |

a: Foam height was measured after the 2-min shake
b: At both room temperature and 50° C oven.

(continued)

**Foam Control and Stability Results**

| Formulation | Foam Height[a] | | Stability |
|---|---|---|---|
| | 0 min | 1 min | |
| EC W/Silicone 3 | 6 | 6 | clear |
| EC W/Sag 47 | 0 | 0 | Separate |
| EC W/Silex -SE 2 | 0 | 0 | Separate |

a: Foam height was measured after the 2-min shake
b: At both room temperature and 50° C oven.

## Claims

1. An emulsifiable concentrate comprising:

   (a) a organic solvent soluble pesticide;
   (b) an emulsifier; and
   (c) a silicone antifoam of the structure:

$$[R^2(R^1)_2SiO_{1/2}]_e[SiO_{4/2}]_f[SiO_{3/2}R^1]_g[SiO_{2/2}(R^1)_2]_x[SiO_{2/2}R^1Z]_y$$

   $e = 2*f + g + 2$; $f = 0$ to 2, $g = 0$ to 2, $x = 30\text{-}150$, $y = 0\text{-}30$, where when $y>0$, $x/y = 4$ to 18, preferably 7 to 12, and $x + y >= 30$; and when $y = 0$, then $x/e$ is 20/1 to 10/1, preferably 18/1 to 12/1; $R^1$ = alkyl of 1-18 carbon; $R^2 = R^1$ or Z with the proviso that when $y = 0$, $R^2 = Z$; $Z = R^4OB_nG$; $R^4$ is a divalent bridging group of 2-4 carbons, B is an alkylene oxide group containing 2-4 carbon (EO/PO/ BO), wherein less than ten mole percent of the alkylene oxide functionalities are ethylene oxide; $n = 8\text{-}30$, and G=H, hydrocarbon radical of 1-18 carbons, or acetyl, preferably H.

2. A concentrate according to claim 1 additionally comprising an organic solvent.

3. A concentrate according to claim 2 wherein the solvent is selected from the group consisting of paraffinic oils. aromatic solvents, chlorinated hydrocarbons, alcohols, ketones, ethers, vegetable oils, petrol oils and C9-C12 hydrocarbon solvents.

4. A concentrate according to claim 1 wherein the emulsifier is nonionic and is an alkoxylated alcohol or an alkoxylated alkyl phenol.

5. A concentrate according to claim 1 wherein $n = 8$ to 15. $f= 0$, $g = 0$, $R^1$ and $R^2$ are methyl, $R^4$ is a C3 bridging group. $x/y = 7$ to 12, and $x = 60$ to 90.

6. A concentrate according to claim 5 wherein the silicone is present at 0.01 to ten weight percent of the concentrate, the emulsifier is present at 1 to 50 weight percent of the concentrate and the pesticide is present at 40 to 97 weight percent of the concentrate.

7. A concentrate according to claim 6 additionally comprising an organic solvent at 20 to 50 weight percent of the concentrate.

## Patentansprüche

1. Emulgierbares Konzentrat, umfassend:

   (a) ein in organischem Lösungsmittel lösliches Pestizid;
   (b) einen Emulgator; und

(c) ein Silicon-Schaumverhütungsmittel der Struktur:

$$[R^2(R^1)_2SiO_{1/2}]_e[SiO_{4/2}]_f[SiO_{3/2}R^1]_g[SiO_{2/2}(R^1)_2]_x[SiO_{2/2}R^1Z]_y$$

e = 2*f + g + 2; f = 0 bis 2, g = 0 bis 2, x = 30 - 150, y = 0 - 30, wobei, wenn y > 0, x/y = 4 bis 18, vorzugsweise 7 bis 12, und x + y >= 30; und wenn y = 0, dann ist x/e 20/1 bis 10/1, vorzugsweise 18/1 bis 12/1; $R^1$ = Alkyl mit 1 - 18 Kohlenstoffen; $R^2 = R^1$ oder Z, mit der Maßgabe, dass wenn y = 0, $R^2$ = Z; Z = $R^4OB_nG$; $R^4$ ist eine zweiwertige Verbrückungsgruppe mit 2 - 4 Kohlenstoffen, B ist eine Alkylenoxidgruppe, die 2 - 4 Kohlenstoffe enthält (EO/PO/BO), worin weniger als 10 Molprozent der Alkylenoxid-Funktionalitäten Ethylenoxid sind; n = 8 - 30 und G = H, Kohlenwasserstoffrest mit 1 - 18 Kohlenstoffen oder Acetyl, vorzugsweise H.

2. Konzentrat nach Anspruch 1, zusätzlich umfassend ein organisches Lösungsmittel.

3. Konzentrat nach Anspruch 2, in dem das Lösungsmittel ausgewählt ist aus der Gruppe bestehend aus Paraffinölen, aromatischen Lösungsmitteln, chlorierten Kohlenwasserstoffen, Alkoholen, Ketonen, Ethern, Pflanzenölen, Erdölen und C9-C12-Kohlenwasserstoff-Lösungsmitteln.

4. Konzentrat nach Anspruch 1, in dem der Emulgator nichtionisch ist und ein alkoxylierter Alkohol oder ein alkoxyliertes Alkylphenol ist.

5. Konzentrat nach Anspruch 1, in dem n = 8 bis 15, f = 0, g = 0, $R^1$ und $R^2$ Methyl sind, $R^4$ eine C3-Verbrückungsgruppe ist, x/y = 7 bis 12 und x = 60 bis 90.

6. Konzentrat nach Anspruch 5, in dem das Silicon zu 0,01 bis 10 Gewichtsprozent des Konzentrats vorliegt, der Emulgator zu 1 bis 50 Gewichtsprozent des Konzentrats vorliegt und das Pestizid zu 40 bis 97 Gewichtsprozent des Konzentrats vorliegt.

7. Konzentrat nach Anspruch 6, zusätzlich umfassend ein organisches Lösungsmittel zu 20 bis 50 Gewichtsprozent des Konzentrats.

**Revendications**

1. Concentré émulsionnable comprenant :

(a) un pesticide soluble dans un solvant organique ;
(b) un émulsifiant ; et
(c) un anti-mousse à la silicone de la structure :

$$[R^2(R^1)_2SiO_{1/2}]_e[SiO_{4/2}]_f[SiO_{3/2}R^1]_g[SiO_{2/2}(R^1)_2]_x[SiO_{2/2}R^1Z]_y \; ;$$

e = 2*f + g + 2 ; f = 0 à 2, g = 0 à 2, x = 30 à 150, y = 0 à 30, dans laquelle, quand y > 0, x/y = 4 à 18, de préférence 7 à 12, et x + y $\geq$ 30 ; et quand y = 0, alors x/e est de 20/1 à 10/1, de préférence de 18/1 à 12/1 ; $R^1$ = un alkyle de 1 à 18 atomes de carbone ; $R^2 = R^1$ ou Z à condition que, quand y = 0, $R^2$ = Z ; Z = $R^4OB_nG$ ; $R^4$ est un groupe de pontage divalent de 2 à 4 atomes de carbone. B est un groupement oxyde d'alkylène contenant de 2 à 4 atomes de carbone (OE/OP/OB), dans lequel moins de dix pour cent en mole des fonctionnalités de l'oxyde d'alkylène sont l'oxyde d'éthylène ; n = 8 à 30, et G = H, un radical hydrocarbure de 1 à 18 atomes de carbone, ou un radical acétyle, de préférence l'H.

2. Concentré selon la revendication 1, comprenant de plus un solvant organique.

3. Concentré selon la revendication 2, dans lequel le solvant est choisi dans le groupe constitué d'huiles de paraffine, solvants aromatiques, hydrocarbures chlorés, alcools, cétones, éthers, huiles végétales, huiles de pétrole et solvants à base d'hydrocarbures en $C_9$-$C_{12}$.

4. Concentré selon la revendication 1, dans lequel l'émulsifiant est non ionique et est un alcool alcoxylé ou un phénol alkyl alcoxylé.

5. Concentré selon la revendication 1, dans lequel n = 8 à 15, f = 0, g = 0, $R^1$ et $R^2$ sont un radical méthyle, $R^4$ est un groupe de pontage en $C_3$, x/y = 7 à 12, et x = 60 à 90.

6. Concentré selon la revendication 5, dans lequel la silicone est présente à raison de 0,01 à dix pour cent en poids du concentré, l'émulsifiant est présent à raison de 1 à 50 pour cent en poids du concentré et le pesticide est présente à raison de 40 à 97 pour cent en poids du concentré.

7. Concentré selon la revendication 6, comprenant de plus un solvant organique à raison de 20 à 50 pour cent en poids du concentré.